# EUROPÄISCHE PATENTSCHRIFT

(11) **EP 3 921 270 B1**
(45) Veröffentlichungstag und Bekanntmachung des Hinweises auf die Patenterteilung: **29.03.2023**
(21) Anmeldenummer: 20702600.6
(22) Anmeldetag: 27.01.2020
(51) Int. Cl.: B66F 17/00, B62B 5/00, B60T 7/22

(54) **SICHERHEITS-SCHALTANORDNUNG MIT SPANNELEMENT**
SAFETY SWITCHING ARRANGEMENT HAVING A CLAMPING ELEMENT
ENSEMBLE DE COMMUTATION DE SÉCURITÉ POURVU D'UN ÉLÉMENT DE SERRAGE

(30) Priorität: 08.02.2019 DE 102019103103
(43) Veröffentlichungstag der Anmeldung: 15.12.2021
(73) Patentinhaber: Haake, André, 48703 Stadtlohn (DE); Haake, Oliver, 48703 Stadtlohn (DE); Haake, Patrick, 48691 Vreden (DE); Haake, Jonas, 48703 Stadtlohn (DE)
(72) Erfinder: Haake, André, 48703 Stadtlohn (DE); Haake, Oliver, 48703 Stadtlohn (DE); Haake, Patrick, 48691 Vreden (DE); Haake, Jonas, 48703 Stadtlohn (DE)
(74) Vertreter: Habbel, Ludwig
(86) Internationale Anmeldenummer: PCT/EP2020/051887
(87) Internationale Veröffentlichungsnummer: WO 2020/160950

(56) Entgegenhaltungen:
- DE-A1- 3 824 637
- DE-U1-202014 001 722
- US-A- 5 653 568
- US-B1- 9 807 930

## Beschreibung

Die Erfindung betrifft eine Sicherheits-Schaltanordnung nach dem Oberbegriff des Anspruchs 1.

Aus der DE 20 2014 001 722 U1 ist eine solche Sicherheits-Schaltanordnung bekannt. Ein typischer Anwendungsfall besteht darin, eine solche Sicherheits-Schaltanordnung als zusätzliche Schutzmaßnahme an einem Flurförderfahrzeug anzubringen, welches in diesem Fall das bewegliche Gerät bildet. Die zusätzliche Schutzmaßnahme kann einerseits zum Schutz beliebiger Gegenstände dienen, mit denen das bewegliche Gerät kollidieren könnte, insbesondere jedoch kann die zusätzliche Schutzmaßnahme zum Personenschutz dienen, beispielsweise wenn die Füße von Personen unter das bewegliche Gerät geraten.

Aus der DE 43 39 688 A1 ist ein Nadelkontaktelement einer Sicherheitskontaktschiene bekannt, die ein Bauteil darstellt, welches in der oben genannten DE 20 2014 001 722 U1 als Schalter bezeichnet ist. Die Sicherheitskontaktschiene weist einen länglichen Strang in Form eines Gummiholprofils auf, der in seinem Querschnitt elektrisch leitende und elektrisch nicht leitende Abschnitte aufweist. Bei Verformung des Gummihohlprofils geraten elektrisch leitende Bereiche in Kontakt miteinander und lösen einen Schaltimpuls aus. Jeweils ein Kanäle zieht sich durch einen elektrisch leitenden Bereich des Gummihohlprofils. Wo sie am Ende des Gummihohlprofils münden, können die Nadelkontaktelemente in diese Kanäle so weit eingesteckt werden, dass sie noch teilweise aus dem Gummihohlprofil ragen und den Schaltimpuls zu einer Auswerteinrichtung weiterleiten können. Das Gummihohlprofil weist weiterhin einen T-förmigen, als Träger bezeichneten Abschnitt auf, der - z. B. bei einer Anwendung an einem Rolltor - in einer entsprechenden Ausnehmung des Rolltors einschiebbar und befestigbar ist. In dem Träger verläuft ein weiterer Kanal, der als Ausnehmung des Gummihohlprofils bezeichnet ist und in den bei Bedarf ein Verstärkungs- oder Haltedraht eingezogen oder eingelassen sein kann.

Beispiele für bewegliche Geräte, die als Flurförderfahrzeug ausgestaltet sind, sind z. B. Gabelstapler, bei denen die Sicherheits-Schaltanordnung z. B. als Karosserieschürze ausgestaltet und / oder an den Zinken der Gabel angebracht sein kann.

Insbesondere bei nicht angetriebenen Gabelhubwagen sowie bei motorisch angetriebenen Gabelhubwagen, die auch als "Mitgänger-Flurförderfahrzeuge" oder umgangssprachlich als "Ameise" bezeichnet werden, befindet sich zum Verfahren dieser beweglichen Geräte stets der Bediener in unmittelbarer Nähe des Geräts und tatsächlich in körperlichem Kontakt mit diesem Gerät, nämlich mit der Deichsel eines solchen Flurförderfahrzeugs. Anders als bei einem Gabelstapler, der einen Fahrerplatz mit einem Sitz für den Fahrer aufweist, läuft der Benutzer hinter oder neben einem nicht angetriebenen Gabelhubwagen oder einem Mitgänger-Flurförderfahrzeug. Daher kann dem Schutz der Füße des Bedieners eine besondere Bedeutung zukommen und zu diesem Zweck die Sicherheits-Schaltanordnung an den zum Bediener weisenden Karosserie-Komponenten angeordnet sein, welche z. B. die Antriebseinheit dieses beweglichen Geräts verkleiden. Auch bei diesen Geräten kann die Sicherheits-Schaltanordnung aus Kollisionsschutzgründen an anderen Bereichen einer Karosserie bzw. eines Gehäuses und / oder an den Zinken der Gabel angebracht sein.

Unterschiedliche Bauformen der beweglichen Geräte erfordern jeweils angepasste Prallflächen unter anderem in Anpassung an die jeweilige Breite und den jeweiligen Konturverlauf des betreffenden Geräte-Modells.

Die Halterung, in welcher die Prallfläche an dem beweglichen Gerät gehalten ist, kann aus einem elastischen verformbaren Profil bestehen, welches aufgrund seiner Verformbarkeit problemlos an unterschiedliche Formen beweglicher Geräte angepasst werden kann. Wenn bei Kollisionen des beweglichen Geräts mit Wänden oder Stützen eines Gebäudes, Stützen von Regalanlagen, beladenen Paletten oder ähnlich stabilen Hindernissen die Halterung gegen diese Hindernisse gerät, kann sie so stark beschädigt werden, dass sie ausgetauscht werden muss. Im Vergleich mit dem Austausch der Prallfläche stellt der Austausch der Halterung üblicherweise eine deutlich aufwändigere Reparaturmaßnahme dar, die dementsprechend mehr Zeit beansprucht. Üblicherweise ist die Halterung mit dem beweglichen Gerät an mehreren Stellen punktuell verbunden, beispielsweise verschraubt. Diese mehrere Befestigungsstellen zu betätigen, verursacht einen gewissen Zeitaufwand. Zudem hat sich herausgestellt, dass bei Kollisionen, bei denen die Halterung zwischen zwei Befestigungsstellen gegen das Hindernis gerät, eine elastisch verformbare Halterung gestaucht und derart verformt werden kann, dass sie entweder zwischen den Befestigungsstellen beschädigt oder von einer Befestigungsstelle abgerissen wird.

Aus der DE 38 24 637 A1 ist eine Sicherheitssteuerung für Fahrzeuge bekannt, die als automatisches Bremssystem ausgestaltet ist. Eine Schaltanordnung weist dabei folgende Elemente auf: Ein Taster ist im Bereich des Fahrzeughecks in einer Halterung angeordnet. Dem Taster liegt ein Betätigungselement an, das mit einer vertikal herabhängenden Platte verbunden ist, wobei die Platte und das Betätigungselement gelenkig aufgehängt sind. Wenn bei Rückwärtsfahrt die Platte gegen ein Hindernis gerät und in Richtung zur Fahrzeugfront geschwenkt wird, gerät das Betätigungselement außer Kontakt mit dem Taster, ähnlich wie sich das Öffnen einer Fahrzeugtür auf einen Türkontaktschalter auswirkt, so dass dieser Taster betätigt wird, was einen Schaltimpuls und in Folge einen automatischen Bremsvorgang des Fahrzeugs auslöst. Wenn die herabhängende Platte jedoch in Vorwärtsfahrt auf dem Boden aufsetzt, kann sie in entgegengesetzter Richtung schwenken oder angehoben werden, und zwar mitsamt dem Betätigungselement sowie dem Taster und dessen Halterung, so dass das Betätigungselement nach wie vor dem Taster anliegt, der Taster nicht betätigt wird und keine Bremsung ausgelöst wird. Zusätzlich zu der Schwerkraft führt eine Zugfeder in diesen Fällen die Platte, das Betätigungselement, den Taster und dessen Halterung wieder in die ursprüngliche Stellung zurück. Die Befestigung der vorgenannten Bauteile am Fahrzeug erfolgt mittels eines Verankerungsprofils, das an den Fahrzeugrahmen geschweißt oder geschraubt ist, sowie mittels Gelenkbolzen.

Der Erfindung liegt die Aufgabe zugrunde, eine gattungsgemäße Sicherheits-Schaltanordnung dahingehend zu verbessern, dass diese hinsichtlich Konstruktion und Wartung besonders wirtschaftlich ausgestaltet ist.

Diese Aufgabe wird durch eine Sicherheits-Schaltanordnung mit den Merkmalen des Anspruchs 1 gelöst. Vorteilhafte Ausgestaltungen sind in den Unteransprüchen beschrieben.

Die Erfindung schlägt mit anderen Worten vor, dass die Halterung und / oder die Prallfläche mittels eines Spannelements an das bewegliche Gerät herangezogen und gehalten ist. Dieses Halten ist bei der genannten DE 38 24 637 A1 nicht vorgesehen, dort stellt es vielmehr einen üblichen Betriebszustand der Schaltanordnung dar, dass die Halterung mitsamt dem Taster von dem Fahrzeugrahmen bzw. dem Verankerungsprofil entfernt werden kann, um Fehlauslösungen zu vermeiden. Die Erfindung geht bei ihrem Vorschlag, die Halterung und / oder die Prallfläche mittels des Spannelements an das bewegliche Gerät heranzuziehen und auch zu halten, von der Überlegung aus, dass die zu schützenden Gehäusebereiche der beweglichen Geräte üblicherweise konvex gebogen verlaufen. Die Seiten können in vielen Fällen geradlinig verlaufen. Im betrieblichen Alltag hat sich jedoch gezeigt, dass in diesen Bereichen häufig keine Kollisionen auftreten. Viel gefährdeter - oder auch gefährlicher für den Benutzer - ist hingegen ein Stirnbereich, beispielsweise bei den erwähnten "Ameisen" das von der Gabel des Flurförderfahrzeugs abgewandte Ende eines Gehäuses, in welchem die Antriebseinheit und der Energiespeicher des Flurförderfahrzeugs untergebracht sind. An diesem Ende des Gehäuses befindet sich auch die Deichsel, die vom Benutzer des beweglichen Geräts bedient wird. Daher kann der Benutzer mit seinen Füßen insbesondere unter diesen Gehäusebereich geraten, so dass die Sicherheits-Schaltanordnung an dieser Stelle von besonderer Bedeutung und besonders vorteilhaft ist.

Das Spannelement erstreckt sich in liegender Richtung und bewirkt durch seine Spannkräfte, die auf die Halterung und / oder auf die Prallplatte einwirken, gleichmäßige Haltekräfte, die über die Länge des Spannelements auf das betreffende Bauteil, nämlich auf die Halterung und / oder auf die Prallplatte einwirken. Für die Halterung bewirkt dies, dass bei einer schrägen Kollision mit einem Hindernis die Halterung nicht gestaucht wird und dabei von einer punktuellen Befestigungsstelle wie einer Verschraubung abreißen kann. Und für die Prallplatte bewirkt dieser gleichmäßige Anpressdruck, dass die Prallplatte optimal an die Kontur des beweglichen Geräts angelegt wird. Passformtoleranzen können auf diese Weise ausgeglichen werden.

Bei Verwendung eines taktilen Schalters dient die Prallfläche als Betätiger des Schalters und ist vorzugsweise zwischen einer ersten, so genannten Ruhestellung und einer zweiten, einen Schaltvorgang des Schalters auslösenden so genannten Betätigungsstellung beweglich, so dass der Schalter ausgelöst wird, wenn die Prallfläche in ihre Betätigungsstellung bewegt wird. Diese Beweglichkeit kann durch eine elastische Verformbarkeit der Prallfläche selbst ermöglicht werden. Alternativ dazu, oder ergänzend zu der elastischen Verformbarkeit der Prallfläche, kann eine bewegliche Lagerung der Prallfläche vorgesehen sein, so dass die Prallfläche beispielsweise ähnlich wie um ein Scharnier bewegt werden kann. Die Prallfläche ist ausreichend starr ausgestaltet, um sicherzustellen, dass beim Druck auf eine zum Schalter versetzte Stelle der Prallfläche auch benachbarte Bereiche der Prallfläche in die Betätigungsstellung beweglich sind, um einen Schaltvorgang eines taktilen Schalters auszulösen.

Die Anpassung starrer Prallflächen an die unterschiedlichen Ausgestaltungen der beweglichen Geräte, z. B. an die jeweilige Breite und den jeweiligen Konturverlauf des betreffenden Geräte-Modells, macht die Herstellung separater Prallflächen aufwendig und beeinflusst die Wirtschaftlichkeit der Prallflächen nachteilig, da eine Vielzahl unterschiedlicher Prallplatten-Versionen erforderlich ist. Wenn die oben erwähnten Toleranzen hinsichtlich der Passform auftreten, kann hierdurch der sichere Halt der Prallplatte beeinträchtigt werden. Vorteilhaft kann daher vorgesehen sein, die Prallflächen nicht vollständig starr auszugestalten, also als spezielles Formteil, welches an eine bestimmte Gerätegeometrie angepasst ist, sondern für die Prallfläche ein Material zu verwenden, welches im Rahmen des vorliegenden Vorschlags als halbhart bezeichnet wird.

Die insofern halbharte Prallfläche ist nämlich einerseits als starr zu bezeichnen, da sie nicht aus einem biegeschlaffen Material wie z.B. einer Folie, einem Tuch oder dergleichen besteht, welches sich bei Druck auf eine bestimmte Stelle nur im Bereich dieser Stelle verformt. Durch Druck auf eine zum Schalter versetzte Stelle der Prallfläche hingegen bewegen sich auch benachbarte Bereiche der Prallfläche und können so in die Betätigungsstellung bewegt werden, um einen Schaltvorgang eines druckempfindlichen, taktilen Schalters auszulösen. Der Kontakt mit der Prallfläche muss also nicht unmittelbar dort erfolgen, wo - von der Prallfläche verdeckt - der taktile Schalter angeordnet ist. Insofern verhält sich die Prallfläche wie ein starres bzw. hartes Element.

An Stelle der erwähnten taktilen Schalter, oder zusätzlich zu diesen, können berührungslose Schalter verwendet werden, z. B. kapazitive Näherungsschalter. Für einen berührungslosen Schalter dient die Prallfläche als Teil einer Umhausung des Schalters zu dessen Schutz vor mechanischen oder anderweitigen Einwirkungen. Das Maß, in welchem die halbharte Prallfläche starr ist, dient in diesem Fall nicht dazu, den Schalter betätigen zu können, sondern zur Formstabilität der Prallfläche, so dass deren Schutzwirkung sichergestellt ist und eine unerwünschte Verformung verhindert sind, beispielsweise durch Schaffung eines unerwünschten Spalts.

Die Prallfläche kann jedoch andererseits - und gleichzeitig - insofern als flexibel bezeichnet werden, als sie auf einer Länge von einigen Dezimetern bogenförmig verformbar ist und z.B. zu einem U-förmigen Verlauf gebogen werden kann. So kann sie nicht nur geradlinig verlaufen, sondern ähnlich wie eine Karosserieschürze, z.B. eine Heckschürze, den Oberflächen der jeweiligen beweglichen Geräte angelegt werden, z. B. den zu schützenden Gehäuse- bzw. Karosseriebereichen des Geräts oder den Bereichen, die vor einer Kollision mit dem Gerät geschützt werden sollen.

Durch diese Flexibilität wird ermöglicht, eine standardisierte Prallfläche an mehreren unterschiedlichen Typen bzw. Modellen beweglicher Geräte zu verwenden, auch wenn diese dort, wo die Sicherheits-Schaltanordnung angebracht werden soll, unterschiedlich geformte Gehäuse bzw. Karosserien aufweisen, denn durch ihre Flexibilität kann die Prallfläche an diese unterschiedlichen Oberflächengeometrien üblicherweise problemlos angepasst werden.

Daher können Prallflächen zunächst als Bandware vorliegen, z.B. mit einer bestimmten Querschnittsgeometrie, welche sogenannte Schaltnoppen zur Betätigung taktiler Schalter aufweisen kann oder eine so genannte Verformungszone, die später noch näher erläutert werden wird. Die jeweilige Situation der beweglichen Geräte wird erstens durch deren Gehäuseform bzw. Karosserieform bestimmt, zweitens dadurch, in welcher Höhe die Halterung der Sicherheits-Schaltanordnung angeordnet ist, und drittens dadurch, in welcher Höhe oberhalb des Untergrundes die Prallplatte enden soll, also welche Bodenfreiheit eingestellt werden soll. In Anpassung an diese jeweilige Situation kann die Bandware zugeschnitten werden, wobei sie als Halbzeug dient, aus welchem durch den Zuschnitt die gewünschte Prallplatte geschaffen werden kann. Im Vergleich zu einer dreidimensional geformten Prallplatte, welche hinsichtlich der drei oben genannten Parameter an die jeweilige Situation des betreffenden Geräts angepasst ist, wird so eine besonders wirtschaftliche Herstellung der Prallplatten ermöglicht. Dies betrifft sowohl die Erstausstattung von Sicherheits-Schaltanordnungen als auch die Lieferung der Prallplatten als Ersatzteile.

Wirtschaftlich besonders vorteilhaft können die Prallflächen als Zuschnitte aus einem zweidimensionalen, glatten Band- oder Plattenmaterial des gewünschten halbharten Materials erzeugt werden. Dementsprechend können aus standardisierten, handelsüblichen Tafeln dieses Plattenmaterials die gewünschten Prallflächen geschnitten werden und so innerhalb kürzester Zeit die Prallflächen beispielsweise als Ersatzteile bereitgestellt werden, ohne dass es einer umfangreichen Lagerhaltung bedarf. Im Vergleich zu der oben erwähnten Bandware mit einer speziellen Profilierung ist dieses glatte Material mit durchgängig gleicher Materialstärke besonders wirtschaftlich erhältlich. Um für den Einsatz mit einem taktilen Schalter die Schaltnoppen zu ersetzen und auch bei Verwendung des glatten Materials zu gewährleisten, dass auf den Schalter punktuell hohe Kräfte einwirken, um beispielsweise bei einer Schaltleiste oder einer Schaltmatte einen Schaltvorgang auszulösen, können separate Elemente zwischen der Prallfläche und dem Schalter angeordnet werden, beispielsweise Rundstäbe, die an der Halterung aufgehängt sein können und von der Halterung nach unten herabhängen und sich dabei zwischen den Schalter und die Prallfläche erstrecken.

Die erwähnten Schaltleisten oder Schaltmatten stellen eine vorteilhafte Ausgestaltung eines Schalters dar, weil sie je nach Bauform einen nahezu beliebig langen Abschnitt des beweglichen Geräts sensorisch abdecken können und dabei als ein einziges Bauteil montiert und mittels einer einzigen Kabelverbindung mit einer Steuerung verbunden werden können, also einen vergleichsweise geringen Montageaufwand erfordern. Alternativ zu derartigen taktilen Schaltern oder auch zusätzlich zu diesen kann vorgesehen sein, mehrere separate Schalter zu verwenden. Insbesondere bei bestimmten Bauteilgeometrien, z.B. geringen Krümmungsradien, bei denen die Montage einer Schaltleiste oder Schaltmatte problematisch sein kann, kann die Montage separater Schalter vorteilhaft sein. Beispielsweise können taktile Schalter lückenlos einander benachbart montiert werden, oder es können berührungslose Näherungsschalter, beispielsweise kapazitive Schalter verwendet werden, die aufgrund ihres Erfassungsbereichs voneinander beanstandet montiert werden können und dennoch lückenlos ebenfalls einen langen Abschnitt des beweglichen Geräts sensorisch abdecken können.

Der vorliegende Vorschlag geht von der Überlegung aus, dass die Gehäuse bzw. Karosserien üblicherweise eine geradlinige oder konvexe, bauchige Umfangskontur aufweisen und keine konkaven Einfallstellen aufweisen. Daher kann eine Befestigung der Prallfläche an dem beweglichen Gerät dadurch erfolgen, dass die Prallfläche mittels eines Spannelements verformt und an die jeweilige Umfangskontur des beweglichen Geräts angelegt wird. Ein zunächst zweidimensionaler Plattenzuschnitt wird auf diese Weise beispielsweise bogenförmig zu einem insgesamt U-förmigen Verlauf verformt, um die oben erwähnte Karosserieschürze eines Gabelstaplers, einer "Ameise" oder dergleichen bilden zu können.

Die Befestigung der Prallfläche am beweglichen Gerät erfolgt auftragsgemäß mittels eines Spannelements, welches ebenfalls flexibel ist und die Prallfläche insofern umgreift, als es außerhalb der Prallfläche verläuft, also auf der Seite, die von dem beweglichen Gerät abgewandt ist. Durch seine eigene Flexibilität kann sich das Spannelement an den Verlauf der Umfangskontur anpassen und dabei die Prallfläche ebenfalls diesem Verlauf folgend an das bewegliche Gerät anpressen, so dass die Prallfläche klemmend festgelegt ist. Durch Lösen des Spannelements wird die Klemmung gelockert, so dass die Prallfläche nun entnommen und z.B. nach einer Beschädigung ausgewechselt werden kann.

Das Spannelement kann beispielsweise an seinen beiden Enden jeweils an dem beweglichen Gerät festgelegt sein. Alternativ kann vorgesehen sein, das Spannelement in Art einer geschlossenen Schlaufe zu verlegen.

Eine Straffung des Spannelements ermöglicht die sichere Halterung der Prallfläche, während eine Lockerung des Spannelements die Montage bzw. den Austausch der Prallfläche ermöglicht. Beispielsweise kann ein stufenlos verstellbares Spannschloss oder ein Excenter- bzw. Kniehebel-Spannverschluss als Spannvorrichtung verwendet werden, um das Spannelement wahlweise zu lockern oder zu straffen. Das Spannelement ist zugfest ausgestaltet, um die Spannkräfte aufnehmen und übertragen zu können, und ansonsten ist es elastisch verformbar, um sich dem jeweiligen Konturverlauf des beweglichen Geräts anpassen zu können. Die Spannvorrichtung, die mit dem Spannelement verbunden ist, ist verstellbar ausgestaltet, um je nach ihrer Einstellung das Spannelement lockern oder spannen zu können.

Eine verdeckte und dementsprechend geschützte Verlegung des Spannelements kann dadurch ermöglicht werden, dass das Spannelement innerhalb der Halterung verläuft. Hierzu weist die Halterung einen sogenannten Spannkanal auf, der das Spannelement aufnimmt. Dieser Spannkanal ist innerhalb der Halterung so angeordnet, dass sich die Prallfläche zwischen dem Spannkanal und dem beweglichen Gerät befindet. Durch die Spannkraft, welche mittels des Spannelements aufgebracht wird, wird daher eine Anpresskraft bewirkt, welche die Prallfläche in Richtung des beweglichen Geräts presst. Dies kann einerseits dazu genutzt werden, eine halbharte Prallplatte zu verformen und der Kontur des beweglichen Geräts anzupassen. Außerdem kann dadurch die Prallplatte klemmend festgelegt werden, so dass nach Lockerung des Spannelements ein besonders einfacher und schneller Austausch der Prallplatte möglich ist.

In ähnlicher Weise kann die Halterung an dem beweglichen Gerät gehalten sein: ein Spannelement erstreckt sich in diesem Fall durch einen Kanal der Halterung, der als Haltekanal bezeichnet ist. Hinsichtlich seiner konstruktiven Ausgestaltung muss sich dieser Haltekanal nicht von dem erwähnten Spannkanal unterscheiden. Hinsichtlich seiner Lage kann er sich jedoch von dem Spannkanal unterscheiden, denn er kann in der Halterung so verlaufen, dass er nicht zur Festlegung der Prallplatte dient, sondern vielmehr die Prallplatte sich außerhalb des Bereichs befindet, in welchem die Spannkräfte wirken. Das Spannelement im Haltekanal dient daher dazu, die Halterung an das bewegliche Gerät anzupressen.

In einer Ausgestaltung kann allerdings vorgesehen sein, dass der Haltekanal und der Spannkanal durch einen einzigen Kanal gebildet sind, so dass das dadurch verlaufende Spannelement erstens die Prallplatte in der Halterung festlegt und zweitens auch die Halterung an das bewegliche Gerät presst.

In einer Ausgestaltung kann vorgesehen sein, dass kein zusätzliches Spannelement verwendet wird, um die Halterung an dem beweglichen Gerät festzulegen, sondern dass vielmehr die Halterung selbst ein Spannelement bildet. Die beiden Enden der Halterung sind in diesem Fall mit einer Spannvorrichtung verbunden sind, entweder mit einer gemeinsamen Spannvorrichtung oder jeweils mit einer Spannvorrichtung, um Zugkräfte in der Halterung aufzubauen und die Halterung an das bewegliche Gerät anzupreisen. Dadurch, dass kein separater Haltekanal erforderlich ist, kann die Halterung vorteilhaft einfach ausgestaltet werden und insbesondere eine vorteilhaft kleine Querschnittsfläche aufweisen, so dass beispielsweise eine besonders flache Ausgestaltung der Sicherheits-Schaltanordnung ermöglicht wird.

Die Prallfläche kann an der Halterung auf unterschiedliche Weise gehalten sein, beispielsweise formschlüssig. In solchen Fällen kann das Spannelement dazu dienen, die Prallfläche in ihrer gebogenen Form zu halten und gegen unerwünschtes Ablösen von der Halterung zu sichern. Besonders vorteilhaft jedoch kann die Prallfläche ohne einen derartigen Formschluss gehalten sein, so dass sie nicht einen Formschluss ermöglichend ausgestaltet zu sein braucht. Die Halterung kann daher vorteilhaft eine Nut zur Aufnahme der Prallfläche aufweisen, so dass die Prallfläche einfach in diese Nut eingesteckt werden und dann durch das Spannelement in dieser Position gehalten werden kann. Die Nut erstreckt sich von einer unteren Mündung zu einem darüber liegenden Nutgrund, so dass die Prallfläche von unten in die Nut eingeschoben werden kann.

Bei dieser vorstehend beschriebenen Ausgestaltung kann das Spannelement vorteilhaft in einem Abstand unterhalb des Nutgrunds verlaufen. Dadurch ist es möglich, die Prallfläche auch dann innerhalb der Nut mittels des Spannelements sicher zu halten, wenn die Prallfläche nicht vollständig bis ganz nach oben zum Nutgrund in die Nut eingeschoben worden ist. Jedoch kann die Prallfläche wahlweise innerhalb der Nut auch noch höher angeordnet werden, so dass die Prallfläche in unterschiedlichen Höheneinstellungen festgelegt werden kann. Dementsprechend kann die Bodenfreiheit zwischen der Unterkante der Prallfläche und dem Boden, auf dem sich das bewegliche Gerät befindet, eingestellt werden.

Die Gehäuse bzw. Karosserien der beweglichen Geräte, z.B. bei Gabelstaplern oder den erwähnten "Ameisen", verlaufen in vielen Fällen nach unten und innen eingezogen. Um zu vermeiden, dass unter dem Einfluss des Spannelements die Halterung nach unten abrutscht, um den Spannkräften nachzugeben, kann vorteilhaft ein Anschlag vorgesehen sein, der unterhalb der Halterung an dem beweglichen Gerät festgelegt ist und dem die Halterung anliegt.

Eine besonders wirtschaftliche Ausgestaltung des Anschlags kann darin bestehen, eine Schraube zu verwenden, deren Schraubenkopf den Anschlag bildet. Die Schraube kann entweder unmittelbar in das Gehäuse bzw. in die Karosserie des beweglichen Geräts eingeschraubt sein, oder sie kann sich durch eine Durchgangsbohrung erstrecken und auf der Innenseite durch eine Mutter gesichert sein.

Auch die Halterung selbst kann vorteilhaft mittels eines Spannelements an dem beweglichen Gerät befestigt sein. Dieses Spannelement wird als Halterungsspanner bezeichnet. Die Funktionsweise des Halterungsspanners kann wie für das beschriebene Spannelement ausgestaltet sein, und auch die Vorteile, welche sich für die Halterung ergeben, sind ähnlich wie die Vorteile bei der Ausgestaltung der Prallfläche. Es muss nämlich keine Halterung speziell an ein bestimmtes bewegliches Gerät angepasst werden, sondern die Halterung kann beispielsweise als Profilleiste ausgestaltet sein, die so flexibel verformbar ist, dass sie an unterschiedliche Umfangskonturen der unterschiedlichen beweglichen Geräte angelegt werden kann. Bei einer solchen Ausgestaltung der Halterung ist die Prallfläche in der Halterung außerhalb des Bereichs angeordnet, in welchem die Spannkräfte des Halterungsspanners wirken. Es ist dementsprechend möglich, die Prallfläche wahlweise zu montieren oder zu demontieren, ohne den Halterungsspanner hierzu lockern zu müssen.

Um die Beweglichkeit der Prallfläche zwischen ihrer Ruhestellung und ihrer Betätigungsstellung zu erleichtern, kann die Prallfläche über ihre Höhe gesehen drei unterschiedliche Bereiche aufweisen: ein unterer Betätigungsabschnitt ist vergleichsweise starr ausgestaltet, um die Betätigung des Schalters auch dann sicherzustellen, wenn die Prallfläche an einer zum Schalter versetzten Stelle gedrückt wurde. Ein oberer Halterungsabschnitt dient dazu, die Prallfläche sicher an der Halterung festlegen zu können. Auch der Halterungsabschnitt kann daher vorteilhaft vergleichsweise starr ausgestaltet sein und beispielsweise aus demselben Material bestehen wie der Betätigungsabschnitt. Zwischen dem Halterungsabschnitt und dem Betätigungsabschnitt verläuft hingegen eine Verformungszone, in welcher die Prallfläche bewusst leichter verformbar ausgestaltet ist, um so die Beweglichkeit des Betätigungsabschnitts zu verbessern.

Die Verformungszone kann beispielsweise durch eine Materialschwächung der Prallfläche geschaffen werden, so dass wirtschaftlich vorteilhaft ein Plattenmaterial verwendet werden kann, welches in Anpassung an die jeweils erforderliche Geometrie zugeschnitten wird - zum Beispiel bei unterschiedlich geformten beweglichen Geräten in Anpassung an deren jeweilige Karosserie. Anschließend kann spanabhebend die Verformungszone geschaffen werden. Bei unveränderter Materialstärke können mehrere Bohrungen die Biegesteifigkeit des Plattenmaterials verringern. Oder mittels Fräslinien oder dergleichen kann die Materialstärke im Bereich der gewünschten Verformungszone verringert werden.

Die beschriebene Materialschwächung im Bereich der Verformungszone stellt eine geometrische strukturelle Schwächung der Prallfläche dar. Aber auch z.B. durch einen wellenförmigen Querschnittsverlauf kann eine geometrische strukturelle Schwächung der Prallfläche, nämlich eine Verringerung ihrer Biegesteifigkeit in diesem Bereich, erreicht werden. In den Fällen einer geometrischen strukturellen Schwächung können sämtliche drei Bereiche der Prallfläche aus ein und demselben Material bestehen.

Alternativ dazu kann die Verformungszone durch einen Materialstreifen gebildet sein, der sich vom Material des Betätigungsabschnitts unterscheidet und eine demgegenüber geringere Biegesteifigkeit aufweist, also ein weicheres Material darstellt.

In einer weiteren Alternative kann die Verformungszone ein mechanisches Gelenk aufweisen. Eine problemlose Anpassung an einen gebogenen Verlauf der Prallfläche kann beispielsweise dadurch ermöglicht werden, dass das Gelenk nicht in Art eines Scharniers mit einer definierten Scharnierachse ausgestaltet ist, sondern durch mehrere aufrecht verlaufende Rundgliederketten gebildet wird, deren ineinander greifende Kettenglieder eine weitgehend freie Beweglichkeit ermöglichen. Jede dieser Ketten kann vergleichsweise kurz ausgestaltet sein und beispielsweise nur zwei oder drei Kettenglieder aufweisen.

In einer Ausgestaltung kann das Spannelement als Spannseil ausgestaltet sein. So wird eine preisgünstige Ausgestaltung des Spannelements ermöglicht, da Seile aus den unterschiedlichsten Materialien und verschiedenen Durchmessern und mit verschiedensten Belastbarkeiten handelsüblich sind und dementsprechend wirtschaftlich verfügbar sind. Auch sind am Markt unterschiedliche Spannelemente handelsüblich, die den Anschluss von Spannseilen ermöglichen, z.B. sogenannte Spannschlösser, Wantenspanner oder dergleichen.

In einer anderen Ausgestaltung kann das Spannelement als Spannband ausgestaltet sein. Durch seinen breiteren Querschnitt verteilen sich die Spannkräfte, die auf die Halterung oder auf die Prallfläche einwirken, auf eine größere Fläche, so dass durch die geringere Flächenpressung die Bauteile geringer belastet werden.

Das Spannband kann beispielsweise als Metallstreifen ausgestaltet sein, der einen problemlosen Anschluss des jeweiligen Spannelements z.B. durch Löten oder Schweißen ermöglicht. Oder das Spannband kann als Streifen aus einem Faserverbundwerkstoff ausgestaltet sein, so dass es bei geringem Gewicht eine sehr hohe Zugbelastbarkeit aufweisen kann und aus Werkstoffen besteht, die nicht korrodieren können.

Ausführungsbeispiele vorschlagsgemäßer Sicherheits-Schaltanordnungen werden nachfolgend anhand der rein schematischen Zeichnungen näher erläutert. Dabei zeigt
- Fig. 1: einen Vertikalschnitt durch einen Bereich eines beweglichen, nämlich verfahrbaren Geräts einschließlich eines ersten Ausführungsbeispiels einer dort angebrachten SicherheitsSchaltanordnung,
- Fig. 2: einen Horizontalschnitt durch das Gerät und die Sicherheits-Schaltanordnung von Fig. 1,
- Fig. 3: einen Vertikalschnitt ähnlich Fig. 1 durch ein zweites Ausführungsbeispiel,
- Fig. 4, 6 und 8: unterschiedliche Verläufe von Spannelementen, jeweils in Draufsicht dargestellt,
- Fig. 5, 7 und 9: perspektivische Ansichten der jeweils daneben dargestellten Spannelemente der Fig. 4, 6 und 8, und die
- Fig. 10 bis 12: Querschnitte durch Ausschnitte unterschiedlicher Ausführungsbeispiele von Prallflächen.

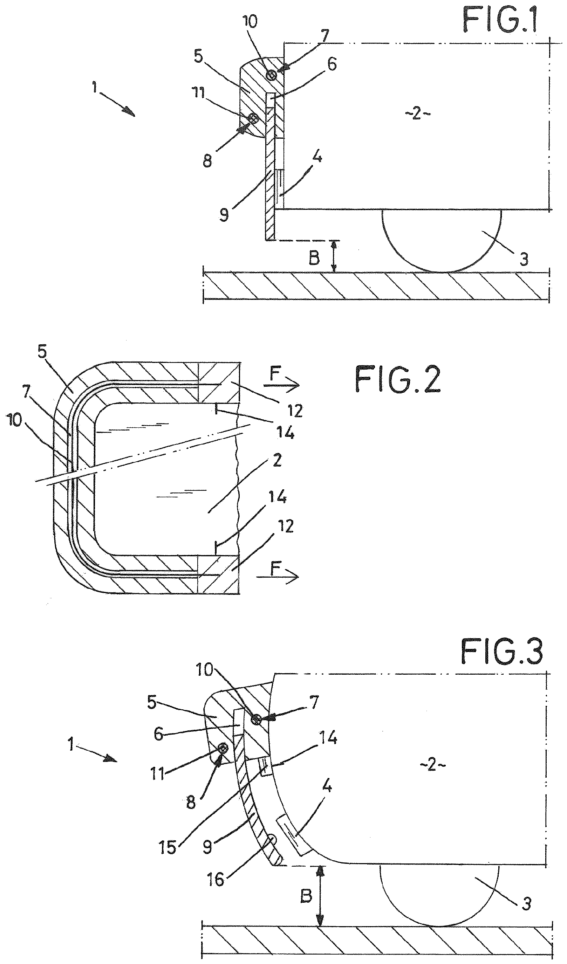

Fig. 1 zeigt einen Vertikalschnitt durch eine Sicherheits-Schaltanordnung 1, die in Art einer Karosserieschürze an einem beweglichen Gerät 2 angeordnet ist. Das bewegliche Gerät 2 ist bei diesem Ausführungsbeispiel als motorisiertes Flurförderfahrzeug ausgestaltet, nämlich als Mitgänger-Flurförderfahrzeug oder so genannte ".Ameise", und weist dementsprechend Laufräder 3 auf. In der Zeichnung ist ein Gehäuse zu sehen, welches einen elektrischen Antriebsmotor für die Laufräder 3 aufnimmt, und in welchem auch ein elektrischer Energiespeicher in Form eines Akkumulator angeordnet ist.

In der Zeichnung nicht dargestellt ist eine Deichsel, die sich von dem beweglichen Gerät 2 aus schräg nach oben und links bis zu einem Handgriff erstreckt. Im Handgriff sind einerseits Bedienelemente untergebracht, um die Gabel des Flurförderfahrzeugs motorisch aufwärts und abwärts zu bewegen, und auch um den auf die Laufräder 3 einwirkenden Antriebsmotor des Flurförderfahrzeugs zu beeinflussen. Weiterhin können mittels dieser Deichsel die Laufräder 3 gelenkt werden. Dieses die Deichsel aufweisende Ende des beweglichen Geräts 2 wird auch als hinteres Ende bzw. als Rückseite des Geräts 2 bezeichnet.

In der Zeichnung ist weiterhin eine sogenannte Gabel nicht dargestellt, die sich aus dem Gehäuse nach rechts erstreckt, höhenverstellbar ist, und die zur Aufnahme von Paletten dient. Die Gabel ist an der sogenannten Vorderseite des beweglichen Geräts 2 vorgesehen.

Die Sicherheits-Schaltanordnung 1 weist einen Schalter 4 auf, der als Schaltleiste oder längliche, vergleichsweise schmale Schaltmatte ausgestaltet ist. Derartige Schalter 4 sind in unterschiedlichen technischen Ausgestaltungen aus der Praxis bekannt, so dass auf die verschiedenen Möglichkeiten ihres Aufbaus nicht im Einzelnen eingegangen zu werden braucht. Falls der Schalter 4 als taktiler Schalter ausgestaltet ist, reagiert er auf Druck, so dass er bei Einwirkung eines bestimmten Drucks seinen Schaltzustand ändert. Falls der Schalter 4 als berührungsloser Näherungsschalter ausgestaltet ist, erfasst er Hindernisse vorteilhaft bereits, bevor diese in Kontakt mit der Prallfläche 9 geraten.

Der Schalter 4 ist mit einer Sicherheitsschaltung in der Art verbunden, dass die Änderung des Schaltzustandes in der Sicherheitsschaltung ausgewertet wird. Beispielsweise kann anschließend ein optisches oder akustisches Warnsignal ausgegeben werden. Oder der Antrieb bzw. eine Bremseinrichtung des Geräts 2 kann beeinflusst werden, beispielsweise um die Geschwindigkeit des Geräts 2 zu verringern oder das Gerät 2 vollständig zum Stillstand abzubremsen.

An der Rückseite des Flurförderfahrzeugs, also des Geräts 2, verläuft eine Halterung 5, die als Profilleiste aus Kunststoff ausgestaltet ist. Die Halterung 5 weist eine nach unten mündende Nut 6 auf, sowie einen Haltekanal 7 und einen Spannkanal 8. In die Nut 6 ist eine Prallfläche 9 eingesteckt, die bei diesem Ausführungsbeispiel an dem Schalter 4 anliegt. Bei Kollisionen kann die Prallfläche 9 beschädigt werden und ihrerseits den Schalter 4 vor Beschädigungen schützen. Im Vergleich zu dem Schalter 4 ist die Prallfläche 9 das preisgünstigere Element, das zudem mit weniger Arbeitsaufwand ausgetauscht werden kann.

Bei dem dargestellten Ausführungsbeispiel kann der Schalter 4 als berührungsloser Näherungsschalter ausgestaltet sein, beispielsweise als kapazitiver Schalter. Der Prallfläche 9 kommt in diesem Fall eine rein mechanische Schutzfunktion zu, um als Teil einer Umhausung den Schalter 4 vor mechanischen Einwirkungen und ggf. auch vor anderen unerwünschten Einwirkungen wie Funkenflug, Flüssigkeitsspritzern oder Witterungseinflüssen wie Niederschlägen zu schützen. Die Prallfläche 9 liegt dem Schalter 4 an, so dass der Erfassungsbereich des berührungslosen Näherungsschalters optimal genutzt werden kann und möglichst weit über die Prallfläche 9 hinausreichen kann.

Abweichend von diesem Ausführungsbeispiel kann die Prallfläche 9 allerdings auch im Abstand von dem Schalter 4 verlaufen, insbesondere wenn der Schalter 4 als taktiler Schalter ausgestaltet ist, welcher auf Druck reagiert. Durch den Abstand können versehentliche Fehlauslösungen des Schalters 4 vermieden werden, die ansonsten durch Bewegungen der Prallfläche 9 ausgelöst werden könnten, z.B. bei überfahren eines unebenen, holprigen Untergrundes.

Wenn beispielsweise bei Rückwärtsfahrt des Geräts 2 die Prallfläche 9 in Kontakt mit einem Hindernis kommt, z.B. mit einem Fuß des Benutzers, übt sie Druck auf den Schalter 4 aus, und zwar spätestens nach Überwindung des geringen, oben erwähnten Abstandes zwischen Prallfläche 9 und Schalter 4, so dass ein taktiler Schalter 4 durch den ausgeübten Druck betätigt wird. Wenn der Schalter 4 jedoch als berührungsloser Näherungsschalter ausgestaltet ist, ist der erwähnte Fuß bereits in den Erfassungsbereich des Schalters 4 gelangt, wenn der Fuß die Prallfläche 9 berührt. Unabhängig von der Ausgestaltung des Schalters 4 ändert jedenfalls der Schalter 4 seinen Schaltzustand, so dass in an sich bekannter Weise ein Schaltsignal erzeugt wird, was von einer zugeordneten Steuerung ausgewertet wird. Ausgelöst durch das Schaltsignal kann mittels der Steuerung beispielsweise der elektrische Antrieb der Laufräder 3 unverzüglich abgeschaltet werden und ggf. sogar die bisherige Fahrtrichtung für eine kurze Fahrtstrecke von beispielsweise 10 cm umgeschaltet werden, so dass das bewegliche Gerät 2 automatisch von dem Hindernis entfernt wird.

Die Prallfläche 9 ist bei dem Ausführungsbeispiel der Fig. 1 nicht so weit wie möglich in die Nut 6 eingeführt, also nicht bis zum Nutgrund. Es ergibt sich zwischen der Unterkante der Prallfläche 9 und dem Untergrund, auf dem das Gerät 2 mit seinen Laufrädern 3 aufsteht, ein Abstand, der als Bodenfreiheit B bezeichnet und in Fig. 1 mit einem Doppelpfeil verdeutlicht ist. Diese Bodenfreiheit B kann in Art einer Grob- oder Voreinstellung dadurch beeinflusst werden, in welcher Höhe die Halterung 5 an dem Gerät 2 montiert wird. Eine Feineinstellung der Bodenfreiheit B kann anschließend dadurch erfolgen, wie weit die Prallfläche 9 in die Nut 6 eingesteckt wird.

Der Haltekanal 7 verläuft oberhalb der Nut 6. Durch den Haltekanal 7 erstreckt sich ein Spannseil, welches als Spannelement dazu dient, die Halterung 5 am Gerät 2 in der gewünschten Position zu halten. Das Spannseil wird daher als Halterungsspanner 10 bezeichnet. Die Oberfläche der Halterung 5, die dem Gerät 2 anliegt, kann rutschhemmend bzw. reibfreudig ausgestaltet sein, wobei in diesem Fall ausschließlich der Halterungsspanner 10 dazu dient, die Halterung 5 am Gerät 2 zu halten. Alternativ kann vorgesehen sein, dass die Halterung mit dem Gerät 2 verklebt ist, beispielsweise durch eine selbstklebende Ausgestaltung dieser Oberfläche der Halterung 5. Je nach Stärke des verwendeten Klebstoff kann dieser dazu dienen, in Ergänzung zur Haltekraft des Halterungsspanners 10 das Verrutschen der Halterung 5 zu verhindern, oder er kann zur Befestigung der Halterung 5 dienen, so dass dem Halterungsspanner 10 in diesem Fall eine Sicherungsfunktion zukommt, um eine unerwünschte Ablösung der Halterung 5 von dem Gerät 2 zu vermeiden, beispielsweise insbesondere im Bereich von Karosseriebiegungen des Geräts 2.

Durch den Spannkanal 8 erstreckt sich ein Spannelement 11, welches ebenfalls als Spannseil ausgestaltet ist. Der Spannkanal 8 verläuft auf Höhe der Nut 6, und zwar hinter der Nut 6, so dass mittels des Spannelements 11 die Prallfläche 9 in der Nut 6 durch Klemmwirkung gehalten werden kann. Bei dem dargestellten Ausführungsbeispiel sind keine komplementären Querschnittsprofilierungen von Nut 6 und Prallfläche 9 vorgesehen, die einen formschlüssigen Halt der Prallfläche 9 in der Nut 6 bewirken würden. Auf diese Weise kann die Prallfläche 9 stufenlos tief in die Nut 6 eingeschoben und dementsprechend unterschiedliche Bodenfreiheiten B eingestellt werden.

Fig. 2 zeigt einen Horizontalschnitt durch die Anordnung von Fig. 1 auf Höhe des Halterungsspanners 10. Dabei ist ersichtlich, dass das Gehäuse des Geräts 2 kurvig von seiner Rückseite in die beiden Fahrzeugseiten übergeht. Die Halterung 5 folgt diesem Kurvenverlauf und weist an den beiden Enden ihres Profilstrangs jeweils eine Abschlusskappe 12 auf, die mit Hilfe von schematisch angedeuteten Schrauben 14 am Gerät 2 befestigt ist. Der Schalter 4 ist daher in einer Umhausung angeordnet, die seitlich durch die beiden Abschlusskappen 12 gebildet wird, oben durch die Halterung 5, vorn durch das Gerät 2, und hinten durch die Prallfläche 9. Da im alltäglichen Betrieb des Geräts 2 keine Einwirkungen von unten auf den Schalter 4 erfolgen, ist der Schalter 4 in dieser Umhausung gut geschützt angeordnet, zugunsten einer möglichst langen Lebensdauer des Schalters 4.

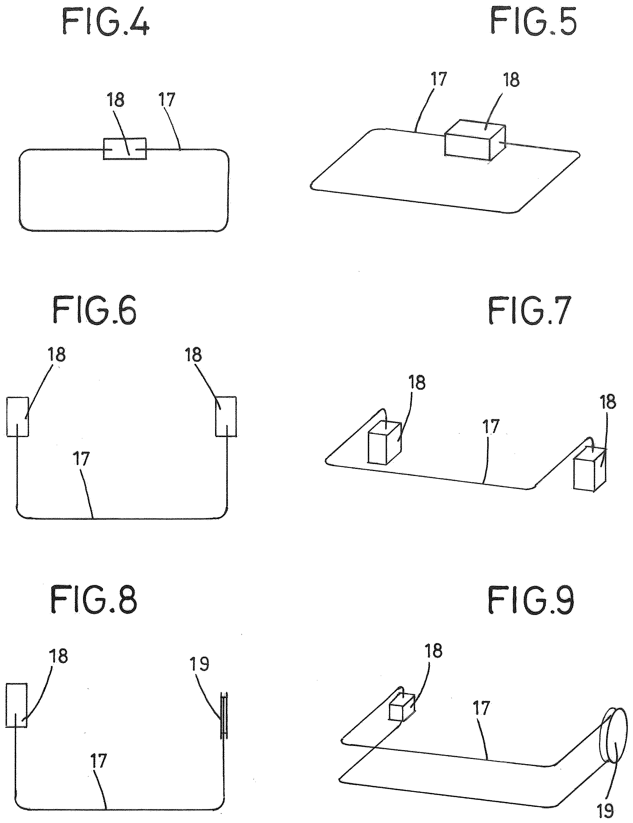

Der Halterungsspanner 10 endet mit jedem seinen beiden Enden in einer Abschlusskappe 12. Einige von vielen denkbaren Möglichkeiten, wie der Halterungsspanner 10 gespannt werden kann, werden anhand der Fig. 4 bis 12 weiter unten erläutert. Für das Spannelement 11 gilt im Wesentlichen das gleiche wie für den Halterungsspanner 10: es verläuft ähnlich wie der Halterungsspanner 10 bis in die beiden Abschlusskappen 12 und kann auch auf die gleiche Art gespannt werden.

Fig. 3 zeigt einen Vertikalschnitt ähnlich Fig. 1 durch ein zweites Ausführungsbeispiel einer Sicherheits-Schaltanordnung 1 an einem beweglichen Gerät 2. Auch dieses Gerät 2 ist mittels Laufrädern 3 als Fahrzeug ausgestaltet. Das Gehäuse bzw. die Karosserie des beweglichen Geräts 2 verläuft an der Rückseite jedoch nicht vertikal, wie beim Ausführungsbeispiel der Fig. 1, sondern die Karosserie ist nach unten hin eingezogen, verläuft also zum Boden hin bogenförmig nach vorn. Beispielsweise kann das Gehäuse dreidimensional gebogen sein. Die Spannkräfte, die durch den Halterungsspanner 10 auf die Halterung 5 aufgebracht werden, weisen daher auch eine geringe Kraftkomponente auf, die nach unten hin wirksam ist. Um sicherzustellen, dass die Halterung 5 nicht unerwünscht an dem Gehäuse des Geräts 2 nach unten rutscht, ist unterhalb der Halterung 5 ein Anschlag 15 vorgesehen, der mittels Schrauben 14 am Gerät 2 festgelegt ist.

Bei dem Ausführungsbeispiel der Fig. 3 ist vorgesehen, dass der Anschlag 15 als längliche Leiste ausgestaltet ist, welche sich über die gesamte Länge der Halterung 5 hinweg erstreckt. Alternativ können zwei oder mehrere dementsprechend kurze Leisten verwendet werden, welche sich jeweils lediglich über einen Abschnitt der Halterung 5 erstrecken. Eine weitere Alternative zu dem dargestellten Ausführungsbeispiel kann darin bestehen, dass die Schrauben 14 selbst den jeweiligen Anschlag 15 bilden, beispielsweise indem die Schrauben 14 von außen in die Karosserie des Geräts 2 eingeschraubt sind und die Schraubenköpfe jeweils einen Anschlag 15 darstellen.

Weiterhin ist bei dem Ausführungsbeispiel Fig. 3 abweichend von dem der Fig. 1 vorgesehen, dass die Prallfläche 9 auf ihrer zum Schalter 4 weisenden Oberfläche mit Schaltnoppen 16 versehen ist. Bei diesem Ausführungsbeispiel ist der Schalter 4 als Schaltleiste oder Schaltmatte ausgestaltet und weist eine Vielzahl einzelner Schaltelemente auf, die elektrisch leitend miteinander verbunden sind, indem sie einander anliegen. Wenn zwei solcher Schaltelemente getrennt werden, wird die elektrische Verbindung unterbrochen, was einen Schaltvorgang des Schalters 4 darstellt. Durch die punktuelle Krafteinwirkung auf den Schalter 4 mittels der Schaltnoppen 16 ist ein hochsensibles Ansprechen der Sicherheits-Schaltanordnung 1 sichergestellt. Selbst bei einem vergleichsweise geringem Anlagedruck, mit welchem die Prallfläche 9 dem Schalter 4 anliegt, bewirkt ein Schaltnoppen 16, dass die Prallfläche 9 mit einer vergleichsweise hohen Flächenpressung auf den Schalter 4 einwirkt, so dass zwei benachbarte Schaltelemente zuverlässig voneinander getrennt werden.

Abweichend von dem dargestellten Ausführungsbeispiel kann vorgesehen sein, eine Prallfläche 9 ohne Schaltnoppen 16 zu verwenden. Um dennoch eine zuverlässige Auslösung des Schalters 4 zu gewährleisten, können von der Halterung 5 Rippen, Stäbe oder ähnliche Elemente herabhängen und sich zwischen die Prallfläche 9 und den Schalter 4 erstrecken, so dass auch hierdurch eine punktuelle oder lineare Krafteinwirkung auf den Schalter 4 erreicht werden kann.

Fig. 4 zeigt in einer schematischen Draufsicht den Verlauf eines Spannseils 17, welches beispielsweise als Halterungsspanner 10 oder als Spannelement 11 dient. Das Spannseil 17 verläuft in Art einer geschlossenen Schlaufe beispielsweise um ein Fahrzeugheck herum, wobei die beiden freien Enden des Spannseils 17 in einer gemeinsamen Spannvorrichtung 18 befestigt sind, wie sie beispielsweise aus der Praxis als sogenanntes Spannschloss oder Wantenspanner bekannt ist. Der Abstand der beiden gegenüberliegenden Enden dieser Spannvorrichtung 18 kann dementsprechend verändert und in Folge das Spannseil 17 wahlweise gespannt oder gelockert werden. Bezogen auf die Geräte 2 der Ausführungsbeispiele von Fig. 1 und 3 bedeutet dies, dass in die Fahrzeugkarosserie Bohrungen eingebracht werden können, um das Spannseil 17 von außen, nämlich von der Halterung 5 oder von einer Abschlusskappe 12, in das Innere des Geräts 2 und zu der dort befindlichen Spannvorrichtung 18 zu führen.

Fig. 5 zeigt in einer zu Fig. 4 gehörigen perspektivischen Ansicht, dass das Spannseil 17 und die Spannvorrichtung 18 höhengleich in einer Ebene verlaufen.

Fig. 6 zeigt in einer Darstellung ähnlich Fig. 4 ein Spannseil 17, welches nicht in Art einer geschlossenen Schlaufe verläuft, sondern vielmehr offen, etwa C-förmig, verläuft und an seinen beiden Enden jeweils in einer Spannvorrichtung 18 gehalten ist, wobei die Spannvorrichtungen 18 und insbesondere ihre Ausrichtung rein schematisch angedeutet sind. Beispielsweise können die Spannvorrichtungen 18 an der Karosserie des Geräts 2 festgelegt und in einer liegenden Wirkungsrichtung ausgerichtet sein. Bezogen auf die Ausführungsbeispiele der Fig. 1 und 3 besteht jedoch auch die Möglichkeit, dass die beiden Spannvorrichtungen 18 jeweils fest in einer Abschlusskappe 12 montiert sein können.

Fig. 7 stellt die zu Fig. 6 gehörige perspektivische Darstellung dar. Daraus geht hervor, dass das Spannseil 17 zu seinen beiden Enden hin nach unten hin umgelenkt ist und die Spannvorrichtungen 18 dementsprechend so angeordnet sind, dass sie eine aufrechte Wirkungsrichtung aufweisen. Beispielsweise können sie in vergleichsweise schmalen, aufrecht verlaufenden Abschlusskappen 12 untergebracht sein, um die Prallplatten 9 innerhalb der Halterung 5 zu halten. Wenn durch das Spannseil 17 jedoch die Halterung 5 selbst gehalten werden soll, sind die beiden Spannvorrichtungen 18 am beweglichen Gerät 2, beispielsweise an dessen Gehäuse, festgelegt.

Fig. 8 zeigt ein Spannseil 17, welches einerseits - nämlich in der Draufsicht - ähnlich wie in Fig. 6 ebenfalls C-förmig verläuft. Andererseits jedoch ist es in Art einer geschlossenen Schlaufe verlegt, ähnlich wie in Fig. 4. Die beiden Enden des Spannseils 17 schließen daher an eine einzige Spannvorrichtung 18 an, und gegenüberliegend ist das Spannseil 17 um eine Umlenkung 19 geführt.

Fig. 9 verdeutlicht durch die perspektivische Darstellung den Verlauf des Spannseils 17 von Fig. 8. Aufgrund der Umlenkung 19 verläuft das Spannseil 17 nicht nur in einer, sondern in zwei unterschiedlichen Höhen. Dies kann für eine besonders zuverlässige, großflächig wirkende Festlegung der Halterung 5 bzw. der Prallfläche 9 genutzt werden, je nachdem, ob das Spannseil 17 als Halterungsspanner 10 oder als Spannelement 11 dient. Oder es kann vorgesehen sein, dasselbe Spannseil 17 in den beiden unterschiedlichen Höhen durch den Haltekanal 7 und durch den Spannkanal 8 zu führen, so dass unterschiedliche Abschnitte desselben Spannseils 17 einerseits als Halterungsspanner 10 und andererseits als Spannelement 11 dienen.

In den Fig. 4 bis 9 ist als Spannelement jeweils ein Spannseil 17 dargestellt. Abweichend davon kann vorgesehen sein, dass die Halterung 5 selbst das Spannelement, oder zumindest einen Abschnitt des Spannelements, bildet. Beispielsweise können sich an die beiden Enden der Halterung 5 Spannvorrichtungen 18 anschließen. Oder an die beiden Enden der Halterung 5 können sich Spannseile 17 anschließen, die dann entsprechend Fig. 4 oder 8 zu einer gemeinsamen Spannvorrichtung 18 verlaufen, oder die entsprechend Fig. 6 jeweils an eine eigene Spannvorrichtung 18 anschließen.

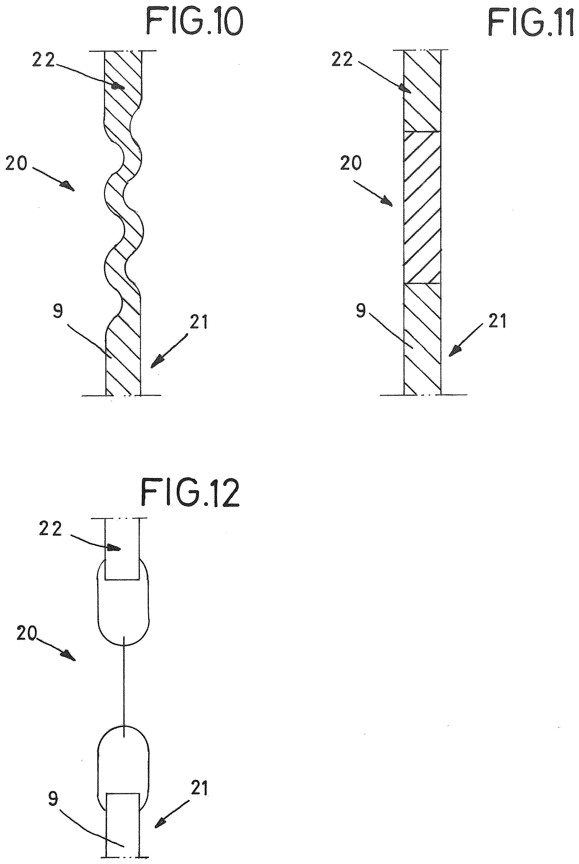

Die Fig. 10 bis 12 zeigen jeweils, für drei unterschiedliche Ausführungsbeispiele, in Art eines Querschnitts einen Teil einer Prallfläche 9, wobei die dargestellten Prallflächen 9 jeweils sowohl nach oben als auch nach unten sich über den dargestellten Bereich hinaus noch weiter erstrecken. Die Prallfläche 9 einer vorschlagsgemäßen Sicherheits-Schaltanordnung 1 ist nämlich insofern halbhart ausgestaltet, als sie einerseits verformbar ist, um beispielsweise dem aus Fig. 2 ersichtlichen gebogenen Verlauf der Karosserie des Geräts 2, und somit dem gebogenen Verlauf der Halterung 5, folgen zu können. Andererseits ist die Prallfläche 9 jedoch in der Weise steif, dass ein Druck auf die Prallfläche 9 auch dann zu einer Betätigung des Schalters 4 führt, wenn der Druck an einer Stelle auf die Prallfläche 9 ausgeübt wird, die zu dem Schalter 4 versetzt ist, beispielsweise oberhalb oder unterhalb des Schalters 4.

Um angesichts dieser halbharten Ausgestaltung der Prallfläche 9 eine Beweglichkeit der Prallfläche 9 zu gewährleisten, ohne dass sich dabei die Prallfläche 9 von der Halterung 5 löst, beispielsweise indem sie sich aus der Nut 6 herausarbeitet, ist bei den Ausführungsbeispielen der Fig. 10 bis 12 jeweils eine Verformungszone 20 vorgesehen, die ähnlich wie ein Gelenk oder ein Scharnier wirkt. Im Bereich der Verformungszone 20 weist die Prallfläche 9 eine verringerte Eigensteifigkeit auf. Die Verformungszone 20 kann daher vorteilhaft nahe unterhalb der Halterung 5 vorgesehen sein, so dass der darunter befindliche Bereich der Prallfläche 9 die gewünschte Steifigkeit aufweist, die für die Betätigung des Schalters 4 vorteilhaft ist. Daher wird dieser Bereich der Prallfläche 9 als Betätigungsabschnitt 21 bezeichnet. Auch oberhalb der Verformungszone 20 weist die Prallfläche 9 ein härteres bzw. steiferes Material als in der Verformungszone 20 auf, so dass ein fester Halt der Prallfläche 9 in der Halterung 5 gewährleistet ist und dieser Bereich der Prallfläche 9 als Halterungsabschnitt 22 bezeichnet wird.

Beim Ausführungsbeispiel der Fig. 10 ist die Prallfläche 9 durchgängig aus dem gleichen Material mit derselben Materialstärke gebildet. In Bezug auf ihre Biegesteifigkeit weist die Prallfläche 9 eine geometrische strukturelle Schwächung auf, um die Verformungszone 20 zu bilden. Diese wird nämlich durch einen wellenförmigen Verlauf der Prallfläche 9 geschaffen.

Fig. 11 zeigt eine Prallfläche 9, bei welcher einerseits der Betätigungsabschnitt 21 und der Halterungsabschnitt 22 sowie andererseits die Verformungszone 20 aus unterschiedlichen Materialien bestehen. Das Material der Verformungszone 20 ist vergleichsweise weicher, weist also eine geringere Biegesteifigkeit auf. Die Prallfläche9 der Fig. 11 kann beispielsweise durch Coextrusion der beiden verschiedenen Materialien hergestellt werden, so dass ein mechanisch belastbarer, dauerhafter Verbund dieser beiden Materialien sichergestellt ist.

Fig. 12 zeigt eine Prallfläche 9, bei welcher die Verformungszone 20 als mechanisches Gelenk ausgestaltet ist, welches den Betätigungsabschnitt 21 und den Halterungsabschnitt 22 miteinander verbindet. Rein beispielhaft sind drei übereinander angeordnete und ineinandergreifende Kettenglieder dargestellt, die eine dementsprechend sehr kurze Kette bilden. Eine Mehrzahl von derartigen Ketten ist, jeweils voneinander beanstandet, entlang der Breite der Prallfläche 9 nebeneinander angeordnet. Diese Ausgestaltung der Verformungszone 20 ermöglicht eine problemlose und spannungsfreie Beweglichkeit des Betätigungsabschnitts 21 der Prallfläche 9, auch wenn die Prallfläche 9 dem aus Fig. 2 ersichtlichen Kurvenverlauf der Halterung 5 folgt.

### Bezugszeichen:

- 1: Sicherheits-Schaltanordnung
- 2: Gerät
- 3: Laufrad
- 4: Schalter
- 5: Halterung
- 6: Nut
- 7: Haltekanal
- 8: Spannkanal
- 9: Prallfläche - B = Bodenfreiheit
- 10: Halterungsspanner
- 11: Spannelement
- 12: Abschlusskappe
- 14: Schraube
- 15: Anschlag
- 16: Schaltnoppen
- 17: Spannseil
- 18: Spannvorrichtung
- 19: Umlenkung
- 20: Verformungszone
- 21: Betätigungsabschnitt
- 22: Halterungsabschnitt

## Patentansprüche

1. Sicherheits-Schaltanordnung (1) an einem beweglichen Gerät (2),
wobei die Schaltanordnung (1) einen Schalter (4) aufweist, sowie eine den Schalter (4) nach außen abdeckende Umhausung mit einer Prallfläche (9) aufweist,
und die Prallfläche (9) als separates Element der Umhausung auswechselbar an einer Halterung (5) gehalten ist,
**dadurch gekennzeichnet,**
**dass** die Halterung (5) und / oder die Prallfläche (9) mittels eines zugfesten Spannelements (11) an das bewegliche Gerät (2) herangezogen und in der Art gehalten ist, dass mittels des Spannelements (11) eine sichere Halterung der Prallfläche ermöglicht ist,
wobei das Spannelement (11) in der Art elastisch verformbar ist, dass es an den Konturverlauf des beweglichen Geräts (2) anpassbar ist.

2. Sicherheits-Schaltanordnung nach Anspruch 1,
**dadurch gekennzeichnet,**
**dass** die Prallfläche (9) in der Art halbhart ausgestaltet ist, dass sie flexibel bogen- oder wellenförmig verformbar ist.

3. Sicherheits-Schaltanordnung nach Anspruch 1 oder 2,
**dadurch gekennzeichnet,**
**dass** die Prallfläche (9) als zweidimensionale Platte aus einem halbharten Material ausgestaltet ist.

4. Sicherheits-Schaltanordnung nach einem der vorhergehenden Ansprüche,
**dadurch gekennzeichnet,**
**dass** das Spannelement (11) mit seinen beiden Enden jeweils an dem beweglichen Gerät (2) festgelegt ist.

5. Sicherheits-Schaltanordnung nach einem der Ansprüche 1 bis 3,
**dadurch gekennzeichnet,**
**dass** das Spannelement (11) zwei Enden aufweist, die miteinander verbunden sind, derart, dass das Spannelement (11) als geschlossene Schlaufe verläuft.

6. Sicherheits-Schaltanordnung nach einem der vorhergehenden Ansprüche,
**dadurch gekennzeichnet,**
**dass** die Halterung (5) einen Spannkanal (8) aufweist,
die Prallfläche (9) in der Halterung (5) zwischen dem Spannkanal (8) und dem beweglichen Gerät (2) angeordnet ist,
und das Spannelement (11) durch den Spannkanal (8) der Halterung (5) verläuft.

7. Sicherheits-Schaltanordnung nach einem der vorhergehenden Ansprüche,
**dadurch gekennzeichnet,**
**dass** die Halterung (5) einen Haltekanal (7) aufweist,
und ein als Halterungsspanner (10) bezeichnetes Spannmittel durch den Haltekanal (7) verläuft, derart, dass die Halterung (5) mittels des Halterungsspanners (10) an dem beweglichen Gerät (2) gehalten ist,
wobei die Prallfläche (9) außerhalb des Kraftwirkungsfeldes des Halterungsspanners (10) in der Halterung (5) angeordnet ist.

8. Sicherheits-Schaltanordnung nach einem der Ansprüche 1 bis 6,
**dadurch gekennzeichnet,**
**dass** die Halterung (5) selbst ein Spannelement (11) bildet, wobei die beiden Enden der Halterung (5) mit einer Spannvorrichtung (18) verbunden sind.

9. Sicherheits-Schaltanordnung nach einem der vorhergehenden Ansprüche,
**dadurch gekennzeichnet,**
**dass** die Halterung (5) eine Nut (6) zur Aufnahme der Prallfläche (9) aufweist,
wobei sich die Nut (6) von einer unteren Mündung zu einem darüber liegenden Nutgrund erstreckt.

10. Sicherheits-Schaltanordnung nach einem der vorhergehenden Ansprüche,
**dadurch gekennzeichnet,**
**dass** das Spannelement (11) in einem Abstand unterhalb des Nutgrunds verläuft, derart, dass die Prallfläche (9) innerhalb der Nut (6) in unterschiedlichen Höheneinstellungen festlegbar ist.

11. Sicherheits-Schaltanordnung nach einem der vorhergehenden Ansprüche,
**dadurch gekennzeichnet,**
**dass** die Halterung (5) einem Anschlag (15) anliegt, der unterhalb der Halterung (5) an dem beweglichen Gerät (2) festgelegt ist.

12. Sicherheits-Schaltanordnung nach Anspruch 11,
**dadurch gekennzeichnet,**
**dass** der Anschlag (15) durch einen Schraubenkopf gebildet ist,
wobei sich die Schraube (14) in ein Gehäuse oder eine Karosserie des beweglichen Geräts (2) erstreckt.

13. Sicherheits-Schaltanordnung nach einem der vorhergehenden Ansprüche,
**dadurch gekennzeichnet,**
**dass** die Prallfläche (9) einen unteren Betätigungsabschnitt (21) aufweist
sowie einen darüber verlaufenden Halterungsabschnitt (22) und eine zwischen dem Halterungsabschnitt (22) und dem Betätigungsabschnitt (21) verlaufende, eine Beweglichkeit des Betätigungsabschnitts (21) zwischen einer Ruhestellung und einer den Schalter (4) betätigenden Betätigungsstellung ermöglichende Verformungszone (20).

14. Sicherheits-Schaltanordnung nach Anspruch 13,
**dadurch gekennzeichnet,**
**dass** die Verformungszone (20) durch eine geometrische strukturelle Schwächung der Prallfläche (9) gebildet ist.

15. Sicherheits-Schaltanordnung nach Anspruch 13,
**dadurch gekennzeichnet,**
**dass** die Verformungszone (20) durch einen Materialstreifen gebildet ist, dessen Material eine geringere Biegesteifigkeit aufweist als das Material des Betätigungsabschnitts (21).

16. Sicherheits-Schaltanordnung nach Anspruch 13,
**dadurch gekennzeichnet,**
**dass** die Verformungszone (20) ein mechanisches Gelenk aufweist.

17. Sicherheits-Schaltanordnung nach einem der vorhergehenden Ansprüche,
**dadurch gekennzeichnet,**
**dass** das Spannelement (11) als Spannseil (17) ausgestaltet ist.

18. Sicherheits-Schaltanordnung nach einem der vorhergehenden Ansprüche,
**dadurch gekennzeichnet,**
**dass** das Spannelement (11) als Spannband ausgestaltet ist.

19. Sicherheits-Schaltanordnung nach Anspruch 18,
**dadurch gekennzeichnet,**
**dass** das Spannelement (11) als Metallstreifen ausgestaltet ist.

20. Sicherheits-Schaltanordnung nach einem der Ansprüche 17 bis 19,
**dadurch gekennzeichnet,**
**dass** das Spannelement (11) aus einem Faserverbundwerkstoff besteht.

21. Sicherheits-Schaltanordnung nach einem der vorhergehenden Ansprüche,
**dadurch gekennzeichnet,**
**dass** die Prallfläche (9) als Betätiger des Schalters (4) zwischen einer ersten Ruhestellung und einer zweiten, einen Schaltvorgang des Schalters (4) auslösenden Betätigungsstellung beweglich ist,
derart, dass bei Bewegung der Prallfläche (9) in ihre Betätigungsfeld der Schalter (4) ausgelöst wird,
wobei die Prallfläche (9) als starre Prallfläche (9) in der Art ausgestaltet ist, dass beim Druck auf eine zum Schalter (4) versetzte Stelle der Prallfläche (9) auch benachbarte Bereiche der Prallfläche (9) in die Betätigungsstellung beweglich sind, um einen Schaltvorgang auszulösen.

22. Sicherheits-Schaltanordnung nach einem der vorhergehenden Ansprüche,
**dadurch gekennzeichnet,**
**dass** der Schalter (4) als Schaltleiste oder Schaltmatte ausgestaltet ist.

## Claims

1. Safety switching arrangement (1) on mobile equipment (2), where the switching arrangement (1) incorporates a switch (4) and a housing that has an impact surface (9) and covers the switch (4) outwardly and where as a separate element of the housing the impact surface (9) is retained exchangeably on a bracket (5), **characterised in that** the bracket (5) and/or the impact surface (9) is pulled onto the mobile equipment (2) by means of a pull-resistant tensioning element (11) and is retained in such a way that secure retention of the impact surface is enabled by the tensioning element (11), where the tensioning element (11) can be elastically deformed in such a way that it can be adapted to the contours of the mobile equipment (2).

2. Safety switching arrangement in accordance with claim 1, **characterised in that** the impact surface (9) is designed half-hard in such a way that it can be deformed in a flexible curve or wave shape.

3. Safety switching arrangement in accordance with claim 1 or 2, **characterised in that** the impact surface (9) is designed as a twodimensional plate made from a half-hard material.

4. Safety switching arrangement in accordance with any one of the preceding claims, **characterised in that** the tensioning element (11) is fastened to the mobile equipment (2) by each of its two ends.

5. Safety switching arrangement in accordance with any one of claims 1 to 3, **characterised in that** the tensioning element (11) incorporates two ends that are joined together in such a way that the tensioning element (11) takes the form of a closed loop.

6. Safety switching arrangement in accordance with any one of the preceding claims, **characterised in that** the bracket (5) incorporates a tensioning duct (8), the impact surface (9) is arranged in the bracket (5) between the tensioning duct (8) and the mobile equipment (2), and the tensioning element (11) extends through the tensioning duct (8) in the bracket (5).

7. Safety switching arrangement in accordance with any one of the preceding claims, **characterised in that** the bracket (5) incorporates a retention duct (7), and a tensioning element referred to as a bracket tensioner (10) extends through the retention duct (7) in such a way that the bracket (5) is retained on the mobile equipment (2) by means of the bracket tensioner (10), where the impact surface (9) is arranged in the bracket (5) outside the force-action field of the bracket tensioner (10).

8. Safety switching arrangement in accordance with any one of claims 1 to 6, **characterised in that** the bracket (5) itself forms a tensioning element (11), where the two ends of the bracket (5) are connected to a tensioning device (18).

9. Safety switching arrangement in accordance with any one of the preceding claims, **characterised in that** the bracket (5) incorporates a groove (6) to receive the impact surface (9), where the groove (6) extends from an opening at the bottom to a groove bottom located above.

10. Safety switching arrangement in accordance with any one of the preceding claims, **characterised in that** the tensioning element (11) extends at a distance below the groove bottom in such a way that the impact surface (9) can be fastened at different heights inside the groove (6).

11. Safety switching arrangement in accordance with any one of the preceding claims, **characterised in that** the bracket (5) lies against a stop (15) that is fastened to the mobile equipment (2) underneath the bracket (5).

12. Safety switching arrangement in accordance with claim 11, **characterised in that** the stop (15) is in the form of a screw head, where the screw (14) extends into a housing or bodywork of the mobile equipment (2).

13. Safety switching arrangement in accordance with any one of the preceding claims, **characterised in that** the impact surface (9) incorporates an actuating section (21) at the bottom and a bracket section (22) extending above it and a deformation zone (20) that extends between the bracket section (22) and the actuating section (21) and enables the actuating section (21) to move between a resting position and an actuating position to operate the switch (4).

14. Safety switching arrangement in accordance with claim 13, **characterised in that** the deformation zone (20) is formed by a geometrical structural weakening of the impact surface (9).

15. Safety switching arrangement in accordance with claim 13, **characterised in that** the deformation zone (20) is formed by a material strip, the material of which is less bend-resistant than the material of the actuating section (21).

16. Safety switching arrangement in accordance with claim 13, **characterised in that** the deformation zone (20) incorporates a mechanical joint.

17. Safety switching arrangement in accordance with any one of the preceding claims, **characterised in that** the tensioning element (11) is designed as a tensioning cable (17).

18. Safety switching arrangement in accordance with any one of the preceding claims, **characterised in that** the tensioning element (11) is designed as a tensioning band.

19. Safety switching arrangement in accordance with claim 18, **characterised in that** the tensioning element (11) is designed as a metal strip.

20. Safety switching arrangement in accordance with any one of claims 17 to 19, **characterised in that** the tensioning element (11) is made from a fibre-reinforced plastic.

21. Safety switching arrangement in accordance with any one of the preceding claims, **characterised in that** the impact surface (9) as actuator of the switch (4) can be moved between a first, that is, resting position and a second position, that is, actuating position that causes the switch (4) to be operated, such that, when the impact surface (9) is moved into its actuating field, the switch (4) is operated, where the impact surface (9) is designed as a rigid impact surface (9) in such a way that, when a part of the impact surface (9) that is offset relative to the switch (4) is pressed, adjacent parts of the impact surface (9) can also be moved into the actuating position to start a switching operation.

22. Safety switching arrangement in accordance with any one of the preceding claims, **characterised in that** the switch (4) is designed as a switch strip or switch mat.

## Revendications

1. Ensemble de commutation de sécurité (1) sur un appareil mobile (2), sachant que l'ensemble de commutation (1) présente un commutateur (4) ainsi qu'un boîtier capotant le commutateur (4) par rapport à l'extérieur et équipé d'une surface d'impact (9), et sachant que la surface d'impact (9) en tant qu'élément à part du boîtier capot est maintenu de manière interchangeable contre une fixation (5), **caractérisé en ce que** la fixation (5) et/ou la surface d'impact (9) est tirée au moyen d'un élément tendeur (11) résistant en traction contre l'appareil mobile (2) et maintenue de telle façon qu'une fixation sûre de la surface d'impact est rendue possible au moyen de l'élément tendeur (11), sachant que l'élément tendeur (11) est déformable élastiquement de façon à être adaptable au contour de l'appareil mobile (2).

2. Ensemble de commutation de sécurité selon la revendication 1, **caractérisé en ce que** la surface d'impact (9) est configurée mi-dure de sorte à être déformable de manière flexible, sous forme de courbe ou d'ondulation.

3. Ensemble de commutation de sécurité selon la revendication 1 ou 2, **caractérisé en ce que** la surface d'impact (9) est configurée en plaque bidimensionnelle à partir d'un matériau mi-dur.

4. Ensemble de commutation de sécurité selon l'une des revendications précédentes, **caractérisée en ce que** l'élément tendeur (11) est immobilisé par ses deux extrémités respectives contre l'appareil mobile (2).

5. Ensemble de commutation de sécurité selon l'une des revendications 1 à 3, **caractérisé en ce que** l'élément tendeur (11) présente deux extrémités reliées l'une à l'autre de sorte que l'élément tendeur (11) présente un tracé en boucle fermée.

6. Ensemble de commutation de sécurité selon l'une des revendications précédentes, **caractérisé en ce que** la fixation (5) présente un canal de tension (8), que la surface d'impact (9) est disposée dans la fixation (5) entre le canal de tension (8) et l'appareil mobile (2), et que l'élément tendeur (11) circule à travers le canal de tension (8) de la fixation (5).

7. Ensemble de commutation de sécurité selon l'une des revendications précédentes, **caractérisé en ce que** la fixation (5) présente un canal de rétention (7) et qu'un moyen de tension appelé tendeur de fixation (10) circule à travers le canal de rétention (7) de sorte que la fixation (5) est maintenue contre l'appareil mobile (2) au moyen du tendeur de fixation (10), sachant que la surface d'impact (9) est disposée dans la fixation (5), en dehors du champ d'action de la force du tendeur de fixation (10).

8. Ensemble de commutation de sécurité selon l'une des revendications 1 à 6, **caractérisé en ce que** la fixation (5) elle-même forme un élément tendeur (11), sachant que les deux extrémités de la fixation (5) sont reliées à un dispositif tendeur (18).

9. Ensemble de commutation de sécurité selon l'une des revendications précédentes, **caractérisé en ce que** la fixation (5) présente une gorge (6) recevant la surface d'impact (9), sachant que la gorge (6) s'étend d'un orifice inférieur vers un fond de gorge situé au-dessus.

10. Ensemble de commutation de sécurité selon l'une des revendications précédentes, **caractérisé en ce que** l'élément tendeur (11) s'étend à distance en dessous du fond de gorge, de sorte que la surface d'impact (9) est immobilisable à l'intérieur de la gorge (6) sur différents réglages en hauteur.

11. Ensemble de commutation de sécurité selon l'une des revendications précédentes, **caractérisé en ce que** la fixation (5) applique contre une butée (15) immobilisée en dessous de la fixation (5) contre l'appareil mobile (2).

12. Ensemble de commutation de sécurité selon la revendication 11, **caractérisé en ce que** la butée (15) est formée par une tête de vis, sachant que la vis (14) s'étend dans un boîtier ou une carrosserie de l'appareil mobile (2).

13. Ensemble de commutation de sécurité selon l'une des revendications précédentes, **caractérisé en ce que** la surface d'impact (9) présente un segment d'actionnement (21) inférieur ainsi qu'un segment (22) de rétention s'étendant au-dessus et une zone de déformation (20) s'étendant entre le segment (22) de rétention et le segment d'actionnement (21), zone qui permet la mobilité du segment d'actionnement (21) entre une position de repos et une position d'actionnement déclenchant le commutateur (4).

14. Ensemble de commutation de sécurité selon la revendication 13, **caractérisé en ce que** la zone de déformation (20) est formée par un affaiblissement structurel géométrique de la surface d'impact (9).

15. Ensemble de commutation de sécurité selon la revendication 13, **caractérisé en ce que** la zone de déformation (20) est formée par un ruban dont la matière constitutive présente une rigidité en flexion moindre que la matière du segment d'actionnement (21).

16. Ensemble de commutation de sécurité selon la revendication 13, **caractérisé en ce que** la zone de déformation (20) présente une articulation mécanique.

17. Ensemble de commutation de sécurité selon l'une des revendications précédentes, **caractérisé en ce que** l'élément tendeur (11) est configuré en câble tendeur (17).

18. Ensemble de commutation de sécurité selon l'une des revendications précédentes, **caractérisé en ce que** l'élément tendeur (11) est configuré en ruban tendeur.

19. Ensemble de commutation de sécurité selon la revendication 18, **caractérisé en ce que** l'élément tendeur (11) est configuré en ruban métallique.

20. Ensemble de commutation de sécurité selon l'une des revendications 17 à 19, **caractérisé en ce que** l'élément tendeur (11) se compose d'un matériau en fibre composite.

21. Ensemble de commutation de sécurité selon l'une des revendications précédentes, **caractérisé en ce que** la surface d'impact (9) officiant d'actionneur du commutateur (4) est déplaçable entre une première position, position de repos, et une seconde position, position d'actionnement déclenchant une opération de commutation du commutateur (4), de sorte que lors du mouvement de la surface d'impact (9) dans son champ d'actionnement, le commutateur (4) est déclenché, sachant que la surface d'impact (9) est configurée comme surface d'impact (9) rigide de sorte qu'en appuyant sur un endroit de la surface d'impact (9) décalé par rapport au commutateur (4), des zones voisines de la surface d'impact (9) sont elles aussi déplaçables jusqu'en position d'actionnement pour déclencher une opération de commutation.

22. Ensemble de commutation de sécurité selon l'une des revendications précédentes, **caractérisé en ce que** le commutateur (4) est configuré en bandeau de commutation ou en tapis de commutation.
